# EUROPÄISCHE PATENTSCHRIFT

(11) **EP 3 875 934 B1**
(45) Veröffentlichungstag und Bekanntmachung des Hinweises auf die Patenterteilung: **10.04.2024**
(21) Anmeldenummer: 21158328.1
(22) Anmeldetag: 22.02.2021
(51) Int. Cl.: G01L 5/00, H01R 43/048

(54) **ABZUGSKRAFTMESSVORRICHTUNG**
PULL-OFF FORCE MEASURING DEVICE
DISPOSITIF DE MESURE DE LA FORCE D'ARRACHAGE

(30) Priorität: 03.03.2020 DE 102020105705
(43) Veröffentlichungstag der Anmeldung: 08.09.2021
(73) Patentinhaber: Komax SLE GmbH & Co. KG, 94481 Grafenau (DE)
(72) Erfinder: Haslinger, Thomas, 94575 Windorf (DE); Kubitscheck, Christopher, 94556 Neuschönau (DE)
(74) Vertreter: Lichtnecker, Markus Christoph

(56) Entgegenhaltungen:
- EP-A1- 1 786 072
- EP-A1- 2 317 613
- EP-B1- 1 786 072
- DE-A1- 19 953 541

## Beschreibung

Die Erfindung betrifft eine Abzugskraftmessvorrichtung, umfassend eine Haltevorrichtung zum Halten eines Funktionsteils einer Kabelverbindung und eine Klemmvorrichtung mit wenigstens zwei Klemmbacken zum Klemmen eines Kabelkörpers der Kabelverbindung.

Bei der Kabelverarbeitung werden Verbindungsstellen, so genannte Crimpstellen, zwischen Kabelenden von Kabelkörpern und Kontaktteilen bzw. Funktionsteilen regelmäßig überprüft.

Bei einem dieser Tests wird versucht, das Funktionsteil vom Kabelende zu ziehen. Die Güte der Verbindung wird dabei in Relation zu der benötigten Abzugskraft gesetzt. Für unterschiedliche Funktionsteiltypen gibt es jeweils entsprechende Vorgaben, welche eine gute Verbindungsstelle erfüllen muss.

Für die Abzugskraftmessung wird die Kabelverbindung, z.B. ein Testkabel, einerseits am Funktionsteil gehalten und andererseits am Kabelkörper fixiert. Danach werden diese auseinandergezogen, sodass die Verbindungsstelle auf Zug belastet wird. Dabei kann die Kraftübertragung am Kabelkörper, besonders bei empfindlichen Kabeln, Probleme bereiten.

Für die Fixierung des Kabelkörpers sind unterschiedliche Klemmsysteme bekannt. Beispielsweise gibt es so genannte Umschlingungshalter, bei denen der Kabelkörper um einen fixen Zylinder, eine so genannte Kraftabbaurolle, gewickelt und erst anschließend mittels Klemmbacken fixiert wird. Die Reibung des Kabelkörpers auf der Zylindermantelfläche verringert die benötigte Haltekraft an den Klemmbacken.

Eine andere Lösung sind so genannte Walzenhalter. Hierbei wird der Kabelkörper ebenfalls um einen Zylinder gewickelt. Anschließend wird der Kabelkörper in einen mittigen Schlitz des Zylinders gezogen. Auf diese Weise kann sich der Kabelkörper nicht mehr von selbst lösen.

Nachteilig an den Lösungen mit Umschlingungszylindern ist die benötigte Kabellänge. Der Kabelkörper wird bei der Abzugskraftmessung beschädigt und ist demnach unbrauchbar. So kann er anschließend nicht mehr weiterverwendet werden. Daher ist man bestrebt, möglichst kurze Kabelkörper für den Test zu verwenden.

Um die benötigte Kabellänge zu verkürzen, können beispielsweise Klemmrollen mit exzentrischer Drehachse verwendet werden. Dabei sind entweder zwei Klemmrollen einander gegenüber positioniert oder einer Klemmrolle ist eine Stützbacke gegenübergestellt.

Eine weitere Lösung bieten Klemmbacken. Diese können eine Verzahnung aufweisen, um mehr Kraft auf den Kabelkörper übertragen zu können.

EP 1 786 072 A1 offenbart eine Abzugskraftmessvorrichtung gemäße dem Oberbegriff des Anspruchs 1. DE 199 53 541 A1 beschreibt eine Messmaschine zum Messen von Zug- und Druckkräften. EP 2 317 613 A1 offenbart eine Vorrichtung und Verfahren zum Handhaben der Kabelenden von Kabeln mittels Klemmbacken.

Sowohl die Klemmrollen als auch die Klemmbacken haben das Problem, dass sie einen Großteil der Zugkräfte in einem kleinen Bereich auf den Kabelkörper übertragen. Daher muss zur Verhinderung des Durchrutschens des Kabels meist eine derart große Klemmkraft aufgewendet werden, dass Beschädigungen am Kabelkörper auftreten.

Für die Abzugskraftmessung sind geschwächte und/oder beschädigte Kabelkörper problematisch, da sie die Messung stören oder gar verfälschen können.

Es ist daher eine Aufgabe der Erfindung, eine Abzugskraftmessvorrichtung der eingangs genannten Art dahingehend zu verbessern, dass Beschädigungen des Kabelkörpers vermieden werden.

Die Lösung dieser Aufgabe erfolgt durch den Gegenstand des unabhängigen Anspruchs.

Die erfindungsgemäße Abzugskraftmessvorrichtung weist eine Haltevorrichtung zum Halten eines Funktionsteils einer Kabelverbindung auf. Das Funktionsteil kann auf diese Weise sicher gehalten werden.

Das Funktionsteil ist insbesondere ein Bestandteil eines Kontaktteils. Neben dem Funktionsteil kann das Kontaktteil einen Crimpbereich, z.B. mit einer Drahtverbindung und/oder einer Isolationsverbindung, aufweisen.

Die Kabelverbindung umfasst insbesondere einen Kabelkörper, also das eigentliche Kabel, sowie ein damit verbundenes, insbesondere vercrimptes, Kontaktteil bzw. Funktionsteil.

Das Funktionsteil und/oder das Kontaktteil kann je nach Anwendungsfall unterschiedlich ausgebildet sein.

Die Abzugskraftmessvorrichtung weist eine Klemmvorrichtung mit wenigstens zwei Klemmbacken zum Klemmen eines Kabelkörpers der Kabelverbindung auf. Die Klemmbacken bilden gewissermaßen Spannelemente.

Der Kabelkörper kann auf diese Weise sicher zwischen den Klemmbacken gehalten werden.

Eine erste Klemmbacke weist wenigstens drei Klemmzähne auf, welche eine unterschiedliche Tiefe aufweisen. Während die Spitzen der Klemmzähne an derselben Höhe angeordnet sind, erstrecken sich die Klemmzähne nach Innen unterschiedlich tief. Dadurch wirken auf den Kabelkörper im Bereich der Klemmzähne unterschiedliche Kräfte.

Beschädigungen des Kabelkörpers können auf diese Weise vermieden werden.

Die Tiefe der Klemmzähne vergrößert sich mit zunehmendem Abstand von der Haltevorrichtung.

Die Klemmzähne können insbesondere einen rechteckförmigen Querschnitt aufweisen.

Insbesondere weist die Abzugskraftmessvorrichtung eine Kraftmessvorrichtung auf, um die auf die Kabelverbindung wirkende Zugkraft messen zu können. Hierbei können herkömmliche Kraftmessvorrichtungen zum Einsatz kommen, z.B. Dehnungsmessstreifen.

Zur Prüfung einer Spleißverbindung, also einer Verbindung zweiter Kabelkörper miteinander, kann insbesondere eine weitere Klemmvorrichtung als Haltevorrichtung verwendet werden. Der zweite Kabelkörper bildet in diesem Fall das Funktionsteil.

Weiterbildungen der Erfindung sind auch den abhängigen Ansprüchen, der Beschreibung sowie den beigefügten Zeichnungen zu entnehmen.

Gemäß einer Ausführungsform weist eine zweite Klemmbacke, welche an einer zur ersten Klemmbacke gegenüberliegenden Seite angeordnet ist, wenigstens zwei Gegenklemmzähne auf, welche eine unterschiedliche Tiefe aufweisen.

Während die Spitzen der Gegenklemmzähne an derselben Höhe angeordnet sind, erstrecken sich die Gegenklemmzähne nach Innen unterschiedlich tief. Dadurch wirken auf den Kabelkörper im Bereich der Gegenklemmzähne unterschiedliche Kräfte.

Beschädigungen des Kabelkörpers können auf diese Weise vermieden werden.

Die Gegenklemmzähne können insbesondere einen rechteckförmigen Querschnitt aufweisen.

Die Gegenklemmzähne können insbesondere jeweils dieselben Tiefen wie die entsprechenden Klemmzähne aufweisen. Vorzugsweise sind die entsprechenden Gegenklemmzähne und Klemmzähne jeweils baugleich ausgebildet. Alternativ können diese auch unterschiedlich sein und insbesondere unterschiedliche Tiefen und/oder Breiten aufweisen.

Nach einer weiteren Ausführungsform sind die Klemmzähne und die Gegenklemmzähne versetzt zueinander angeordnet. Dadurch steht genügend Platz für den Kabelkörper zur Verfügung. Insbesondere kann sich der Kabelkörper schlangenförmig zwischen den Klemmzähnen und Gegenklemmzähnen erstrecken.

Gemäß einer weiteren Ausführungsform sind mehr als zwei Gegenklemmzähne vorgesehen. Vorzugsweise können genau oder mindestens drei, vier, fünf, sechs, sieben, acht, neun oder zehn Klemmzähne und/oder Gegenklemmzähne vorgesehen sein.

Insbesondere können sämtliche Klemmzähne und/oder Gegenklemmzähne jeweils unterschiedliche Tiefen aufweisen. Alternativ können wenigstens zwei Klemmzähne und/oder Gegenklemmzähne jeweils gleiche Tiefen aufweisen.

Nach einer weiteren Ausführungsform ist die Breite der Klemmzähne und/oder Gegenklemmzähne gleich. Die Klemmzähne und/oder Gegenklemmzähne unterscheiden sich insbesondere lediglich anhand ihrer Tiefe.

Alternativ kann jedoch auch die Breite der Klemmzähne und/oder Gegenklemmzähne unterschiedlich sein.

Gemäß einer weiteren Ausführungsform vergrößert sich die Tiefe der Gegenklemmzähne mit zunehmendem Abstand von der Haltevorrichtung.

Abschnitte des Kabelkörpers, welche weiter vom Funktionsteil entfernt sind, befinden sich zwischen Klemmzähnen und/oder Gegenklemmzähnen mit größeren Tiefen, während Abschnitte des Kabelkörpers, welche weniger weit vom Funktionsteil entfernt sind, zwischen Klemmzähnen und/oder Gegenklemmzähnen mit geringeren Tiefen angeordnet sind.

Das Klemmprofil der Klemmvorrichtung weist insbesondere eine progressive Rechteckverzahnung auf. So besitzen die Klemmbacken vorzugsweise eine Verzahnung, deren Tiefe sich in Richtung der Haltevorrichtung verringert. Anders gesagt verläuft die Verzahnungstiefe progressiv in Richtung weg von der Haltevorrichtung.

Die Zugspannung auf den Kabelkörper im Bereich der Klemmvorrichtung ist am ersten Zahn am größten und nimmt mit jedem Zahn sukzessive ab. Die kleine Verzahnungstiefe des ersten Zahns hält die Belastung des Kabelkörpers durch das Halten gering. Am nächsten Zahn ist die Zugspannung auf den Kabelkörper schon ein wenig geringer. Daher kann die Verzahnungstiefe etwas größer gewählt werden, um mehr Haltekraft zu generieren. Dies wird für die weiteren Zähne fortgesetzt.

Durch die sich ändernden Tiefen der Klemmzähne und/oder Gegenklemmzähne werden die unterschiedlichen Belastungen des Kabelkörpers insbesondere ausgeglichen.

Die Gesamtbelastung des Kabelkörpers aufgrund der Zugspannung sowie der Belastung durch das Halten im Bereich der Klemmvorrichtung, wird auf diese Weise besser verteilt und verhindert eine Überbelastung, beispielsweise ein Versagen des Kabelkörpers.

Die Tiefe der Klemmzähne und/oder Gegenklemmzähne kann gleichmäßig oder unterschiedlich stark wachsen. Auch kann sich die Tiefe abschnittsweise ungleichmäßig und abschnittsweise gleichmäßig vergrößern.

Nach einer weiteren Ausführungsform vergrößert sich die Tiefe gleichmäßig um einen bestimmten Wert bzw. Betrag.

Der Wert kann insbesondere gleichbleiben. Vorzugsweise kann die Tiefe linear steigen. So kann beispielsweise zₙ = zₙ₋₁ + m gelten, wobei z für die Tiefe eines Klemmzahns bzw. Gegenklemmzahns steht, n die Nummer des Klemmzahns bzw. Gegenklemmzahns und m einen bestimmten Wert darstellt. Die Nummer n steigt mit zunehmendem Abstand von der Haltevorrichtung.

Der Wert m kann z.B. 0,1 mm, 0,2 mm, 0,3 mm, 0,4 mm, 0,5 mm, 0,6 mm, 0,7 mm, 0,8 mm, 0,9 mm, 1,0 mm oder mehr betragen.

Alternativ kann sich die Tiefe ungleichmäßig vergrößern. Beispielsweise kann sich die Tiefe zunächst stärker und dann, insbesondere gleichmäßig, weniger stark vergrößern. Insbesondere kann sich die Tiefe z.B. zunächst, insbesondere einmalig, um 0,4 mm und anschließend, insbesondere gleichmäßig, um 0,3 mm vergrößern.

So kann nach einer weiteren Ausführungsform ein von der Haltevorrichtung aus erster Klemmzahn und/oder Gegenklemmzahn eine Tiefe von 0,2 mm, ein zweiter Klemmzahn und/oder Gegenklemmzahn eine Tiefe von 0,6 mm, ein dritter Klemmzahn und/oder Gegenklemmzahn eine Tiefe von 0,9 mm, ein vierter Klemmzahn und/oder Gegenklemmzahn eine Tiefe von 1,2 mm und/oder ein fünfter Klemmzahn und/oder Gegenklemmzahn eine Tiefe von 1,5 mm aufweisen.

Es war überraschend, dass ein derartiges Tiefenprofil zu einer möglichst gleichmäßige Belastung des Kabelkörpers führt.

Gemäß einer weiteren Ausführungsform vergrößert sich die Tiefe gemäß einer bestimmten Funktion. Beispielsweise kann es sich bei der Funktion um eine Exponentialfunktion handeln. Grundsätzlich sind sämtliche Funktionen denkbar, z.B. zₙ = x * zₙ₋₁, wobei z für die Tiefe eines Klemmzahns bzw. Gegenklemmzahns steht, n die Nummer des Klemmzahns bzw. Gegenklemmzahns und x einen bestimmten Multiplikator darstellt. Die Nummer n steigt mit zunehmendem Abstand von der Haltevorrichtung. x kann beispielsweise gleich 2, 3, 4, 5, 6, 7, 8, 9, 10 oder mehr sein.

Nach einer Ausführungsform verdoppelt sich die Tiefe von einem Klemmzahn und/oder Gegenklemmzahn zum nächsten Klemmzahn und/oder Gegenklemmzahn jeweils. So kann beispielsweise zₙ = 2 * zₙ₋₁ gelten.

Alle hier beschriebenen Aspekte, Ausführungsformen und Merkmale der Erfindung können, insbesondere auch losgelöst von der konkreten Ausgestaltung, in deren Zusammenhang sie erwähnt werden, jeweils miteinander kombiniert werden. Insbesondere können alle Gegenstände der abhängigen Ansprüche untereinander und mit dem Gegenstand des unabhängigen Anspruchs kombiniert werden.

Die Erfindung wird im Folgenden beispielhaft unter Bezugnahme auf die Zeichnungen beschrieben. Es zeigen:
- Fig. 1: eine Perspektivansicht einer Ausführungsform einer erfindungsgemäßen Abzugskraftmessvorrichtung,
- Fig. 2: eine Draufsicht der Abzugskraftmessvorrichtung gemäß Fig. 1 ohne Kabelverbindung,
- Fig. 3: eine Draufsicht der Abzugskraftmessvorrichtung gemäß Fig. 1 mit Kabelverbindung,
- Fig. 4: ein Diagramm mit linearem Verlauf der Verzahnungstiefe,
- Fig. 5: ein Diagramm mit ungleichmäßigem Verlauf der Verzahnungstiefe,
- Fig. 6: ein Diagramm mit ungleichmäßigem Verlauf der Verzahnungstiefe,
- Fig. 7: eine Schnittansicht einer Ausführungsform einer geöffneten Klemmvorrichtung mit einheitlicher Verzahnungstiefe,
- Fig. 8: eine Schnittansicht der Ausführungsform gemäß Fig. 7 mit geschlossener Klemmvorrichtung,
- Fig. 9: eine vergrößerte Detailansicht der Ausführungsform gemäß Fig. 8,
- Fig. 10: eine Schnittansicht einer Ausführungsform einer geöffneten Klemmvorrichtung einer erfindungsgemäßen Abzugskraftmessvorrichtung mit sich ändernder Verzahnungstiefe,
- Fig. 11: eine Schnittansicht der Ausführungsform gemäß Fig. 10 mit geschlossener Klemmvorrichtung,
- Fig. 12: eine Schnittansicht einer Ausführungsform einer geöffneten Klemmvorrichtung einer erfindungsgemäßen Abzugskraftmessvorrichtung mit sich ändernder Verzahnungstiefe,
- Fig. 13: eine Schnittansicht der Ausführungsform gemäß Fig. 12 mit geschlossener Klemmvorrichtung,
- Fig. 14: eine Seitenansicht einer Ausführungsform einer Kabelverbindung,
- Fig. 15: eine Draufsicht der Kabelverbindung gemäß Fig. 14, und
- Fig. 16: Perspektivansichten verschiedener Ausführungsformen von Kabelverbindungen.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

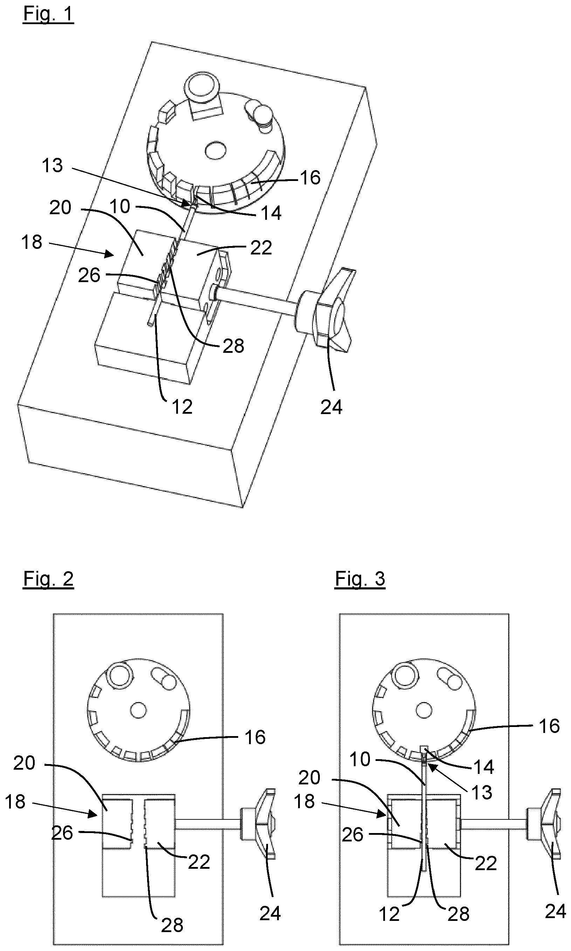

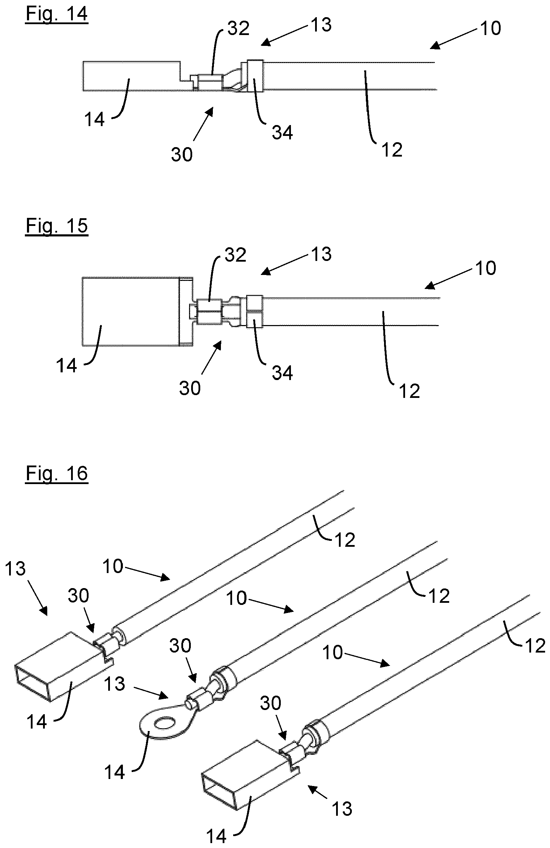

Fig. 1 zeigt eine Abzugskraftmessvorrichtung zum Messen einer Abzugskraft einer Kabelverbindung 10. Die Kabelverbindung 10 weist einen Kabelkörper 12 sowie ein Kontaktteil 13 mit einem Funktionsteil 14 auf. Detailansichten möglicher Kabelverbindungen 10 sind in Fig. 14 bis 16 dargestellt.

Die Abzugskraftmessvorrichtung umfasst eine Haltevorrichtung 16 zum Halten des Kontaktteils 13 bzw. des Funktionsteils 14 der Kabelverbindung 10.

Ferner weist die Abzugskraftmessvorrichtung eine Klemmvorrichtung 18 mit zwei Klemmbacken 20, 22 zum Klemmen des Kabelkörpers 12 der Kabelverbindung 10 auf. Zum Verstellen, insbesondere zum Schließen und/oder Öffnen, der Klemmbacken 20, 22 kann ein Drehgriff 24 vorgesehen sein.

Die erste Klemmbacke 20 weist mehrere Klemmzähne 26 auf, während die zweite Klemmbacke 22 mehrere Gegenklemmzähne 28 aufweist.

Wie in Fig. 2 zu sehen ist, sind die Klemmzähne 26 und Gegenklemmzähne 28 jeweils versetzt zueinander angeordnet.

Wird eine Kabelverbindung 10 zwischen die Klemmbacken 20, 22 eingelegt, kann diese, wie in Fig. 3 gezeigt ist, zwischen den Klemmzähnen 26 und Gegenklemmzähnen 28 eingeklemmt werden.

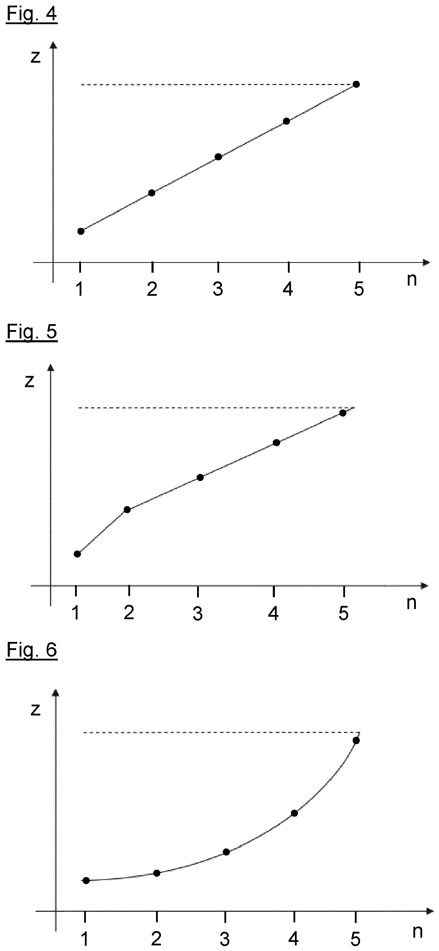

In den in Fig. 4 bis 6 gezeigten Diagrammen repräsentiert die x-Achse die Nummer n der jeweiligen Klemmzähne 26 bzw. Gegenklemmzähne 28, während die y-Achse die Tiefe z in Millimeter darstellt.

In Fig. 4 ist ein linearer Verlauf der Tiefe z dargestellt, d.h. die Tiefe z der Klemmzähne 26 und Gegenklemmzähne 28 steigt kontinuierlich mit zunehmendem Abstand von der Haltevorrichtung 16.

Als Vergleich ist gestrichelt eine einheitliche Tiefe z dargestellt, d.h. hier ändert sich die Tiefe der Klemmzähne 26 und Gegenklemmzähne 28 nicht.

Fig. 5 zeigt einen ungleichmäßigen Verlauf der Tiefe z. Beispielsweise weist ein von der Haltevorrichtung 16 aus gesehen erster Klemmzahn und/oder Gegenklemmzahn eine Tiefe von 0,2 mm, ein zweiter Klemmzahn und/oder Gegenklemmzahn eine Tiefe von 0,6 mm, ein dritter Klemmzahn und/oder Gegenklemmzahn eine Tiefe von 0,9 mm, ein vierter Klemmzahn und/oder Gegenklemmzahn eine Tiefe von 1,2 mm und/oder ein fünfter Klemmzahn und/oder Gegenklemmzahn eine Tiefe von 1,5 mm auf.

In Fig. 6 folgt der Verlauf der Tiefe z einer Funktion, wobei sich die Tiefe z insbesondere von einem Klemmzahn 26 und/oder Gegenklemmzahn 28 zum nächsten jeweils verdoppelt.

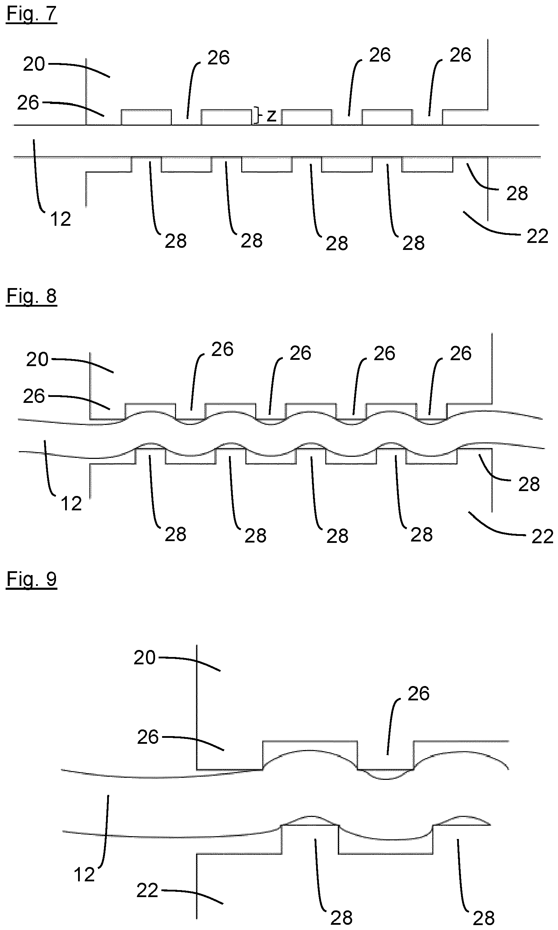

Fig. 7 zeigt eine geöffnete Klemmvorrichtung 18 mit einheitlicher Tiefe z.

Wird, wie in Fig. 8 dargestellt, die Klemmvorrichtung 18 geschlossen, wird der Kabelkörper 12 eingeklemmt.

Wie in der vergrößerten Detailansicht in Fig. 9 dargestellt, kann der Kabelkörper 12 dabei beschädigt werden, insbesondere wenn eine Zugkraft ausgeübt wird.

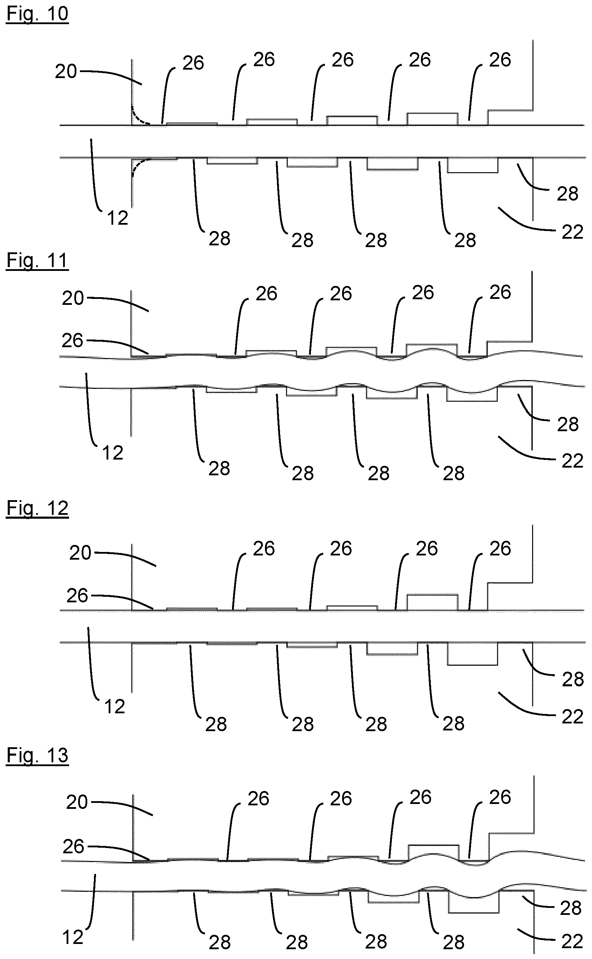

In Fig. 10 ändert sich die Tiefe z der Klemmzähne 26 und Gegenklemmzähne 28 hingegen entsprechend dem in Fig. 5 dargestellten Verlauf.

Wie mit den gestrichelten Linien dargestellt ist, können die Klemmbacken 20, 22 optional eine Einlaufgeometrie in Form eines Radius aufweisen. Beispielsweise können die Kanten, welche der Haltevorrichtung 16 am nächsten liegen, abgerundet sein.

Wird, wie in Fig. 11 dargestellt, die Klemmvorrichtung 18 geschlossen, wird der Kabelkörper 12 schlangenförmig eingeklemmt. Die unterschiedlichen Zugkräfte können durch die variierenden Tiefen z ausgeglichen werden.

In Fig. 12 ändert sich die Tiefe z der Klemmzähne 26 und Gegenklemmzähne 28 entsprechend dem in Fig. 6 dargestellten Verlauf.

Wird, wie in Fig. 13 dargestellt, die Klemmvorrichtung 18 geschlossen, wird der Kabelkörper 12 schlangenförmig eingeklemmt. Die unterschiedlichen Zugkräfte können auch hierbei durch die variierenden Tiefen z ausgeglichen werden.

Die Fig. 14 bis 16 zeigen schließlich verschiedene Kabelverbindungen 10 mit unterschiedlichen Kontaktteilen 13 bzw. Funktionsteilen 14.

Die Kontaktteilen 13 bzw. Funktionsteile 14 sind an die Kabelkörper 12 gecrimpt. Vorzugsweise umfassen die Kontaktteile 13 neben den Funktionsteilen 14 auch Verbindungsstellen 30. Diese Verbindungsstellen 30 können insbesondere eine Drahtverbindung 32 und/oder eine Isolationsverbindung 34 aufweisen.

Die Kabelverbindungen 10 können beispielsweise mit einer erfindungsgemäßen Abzugskraftmessvorrichtung auf einfache und schonende Weise geprüft werden.

### Bezugszeichenliste

- 10: Kabelverbindung
- 12: Kabelkörper
- 13: Kontaktteil
- 14: Funktionsteil
- 16: Haltevorrichtung
- 18: Klemmvorrichtung
- 20: erste Klemmbacke
- 22: zweite Klemmbacke
- 24: Drehgriff
- 26: Klemmzahn
- 28: Gegenklemmzahn
- 30: Verbindungsstelle
- 32: Drahtverbindung
- 34: Isolationsverbindung

- n: Nummer
- z: Tiefe

## Patentansprüche

1. Abzugskraftmessvorrichtung, umfassend
eine Haltevorrichtung (16) zum Halten eines Funktionsteils (14) einer Kabelverbindung (10), und
eine Klemmvorrichtung (18) mit wenigstens zwei Klemmbacken (20, 22) zum Klemmen eines Kabelkörpers (12) der Kabelverbindung (10), wobei eine erste Klemmbacke (20) wenigstens drei Klemmzähne (26) aufweist, **dadurch gekennzeichnet,**
**dass** die Klemmzähne (26) eine unterschiedliche Tiefe (z) aufweisen, wobei die Spitzen der Klemmzähne (26) an derselben Höhe angeordnet sind und sich die Klemmzähne (26) nach Innen unterschiedlich tief erstrecken, und wobei
sich die Tiefe (z) der Klemmzähne (26) mit zunehmendem Abstand von der Haltevorrichtung (16) vergrößert.

2. Abzugskraftmessvorrichtung nach Anspruch 1,
**dadurch gekennzeichnet,**
**dass** eine zweite Klemmbacke (22), welche an einer zur ersten Klemmbacke (20) gegenüberliegenden Seite angeordnet ist, wenigstens zwei Gegenklemmzähne (28) aufweist, welche eine unterschiedliche Tiefe (z) aufweisen, wobei
die Spitzen der Gegenklemmzähne (28) an derselben Höhe angeordnet sind und sich die Gegenklemmzähne (28) nach Innen unterschiedlich tief erstrecken.

3. Abzugskraftmessvorrichtung nach Anspruch 1 oder 2,
**dadurch gekennzeichnet,**
**dass** die Klemmzähne (26) und die Gegenklemmzähne (28) versetzt zueinander angeordnet sind.

4. Abzugskraftmessvorrichtung nach einem der vorhergehenden Ansprüche,
**dadurch gekennzeichnet,**
**dass** mehr als zwei Gegenklemmzähne (28) vorgesehen sind, vorzugsweise drei, vier, fünf, sechs, sieben, acht, neun oder zehn.

5. Abzugskraftmessvorrichtung nach einem der vorhergehenden Ansprüche,
**dadurch gekennzeichnet,**
**dass** die Breite der Klemmzähne (26) und/oder Gegenklemmzähne (28) gleich ist.

6. Abzugskraftmessvorrichtung nach einem der vorhergehenden Ansprüche,
**dadurch gekennzeichnet,**
**dass** sich die Tiefe (z) der Gegenklemmzähne (28) mit zunehmendem Abstand von der Haltevorrichtung (16) vergrößert.

7. Abzugskraftmessvorrichtung nach Anspruch 6,
**dadurch gekennzeichnet,**
**dass** sich die Tiefe (z) gleichmäßig um einen bestimmten Wert vergrößert.

8. Abzugskraftmessvorrichtung nach Anspruch 6,
**dadurch gekennzeichnet,**
**dass** ein von der Haltevorrichtung (16) aus erster Klemmzahn (26) und/oder Gegenklemmzahn (28) eine Tiefe (z) von 0,2 mm, ein zweiter Klemmzahn (26) und/oder Gegenklemmzahn (28) eine Tiefe (z) von 0,6 mm, ein dritter Klemmzahn (26) und/oder Gegenklemmzahn (28) eine Tiefe (z) von 0,9 mm, ein vierter Klemmzahn (26) und/oder Gegenklemmzahn (28) eine Tiefe (z) von 1,2 mm und/oder ein fünfter Klemmzahn (26) und/oder Gegenklemmzahn (28) eine Tiefe (z) von 1,5 mm aufweist.

9. Abzugskraftmessvorrichtung nach Anspruch 6,
**dadurch gekennzeichnet,**
**dass** sich die Tiefe (z) gemäß einer bestimmten Funktion vergrößert.

10. Abzugskraftmessvorrichtung nach Anspruch 9,
**dadurch gekennzeichnet,**
**dass** sich die Tiefe (z) von einem Klemmzahn (26) und/oder Gegenklemmzahn (28) zum nächsten Klemmzahn (26) und/oder Gegenklemmzahn (28) jeweils verdoppelt.

## Claims

1. A pull-off force measuring device comprising
a holding device (16) for holding a functional part (14) of a cable connection (10), and
a clamping device (18) having at least two clamping jaws (20, 22) for clamping a cable body (12) of the cable connection (10), wherein a first clamping jaw (20) has at least three clamping teeth (26),
**characterised in that**
the clamping teeth (26) have a different depth (z), wherein the tips of the clamping teeth (26) are disposed at the same height and the clamping teeth (26) extend inwards to different depths, and wherein
the depth (z) of the clamping teeth (26) increases with increase in distance from the holding device (16).

2. Pull-off force measuring device in accordance with claim 1,
**characterised in that**
a second clamping jaw (22), which is disposed on a side opposite the first clamping jaw (20), has at least two counter-clamping teeth (28) which have a different depth (z), wherein
the tips of the counter-clamping teeth (28) are disposed at the same height and the counter-clamping teeth (28) extend inwards to different depths.

3. Pull-off force measuring device in accordance with claim 1 or 2,
**characterised in that**
the clamping teeth (26) and the counter-clamping teeth (28) are disposed offset from one another.

4. Pull-off force measuring device in accordance with any of the preceding claims,
**characterised in that**
more than two counter-clamping teeth (28) are provided, preferably three, four, five, six, seven, eight, nine or ten.

5. Pull-off force measuring device in accordance with any of the preceding claims,
**characterised in that**
the width of the clamping teeth (26) and/or counter-clamping teeth (28) is the same.

6. Pull-off force measuring device in accordance with any of the preceding claims,
**characterised in that**
the depth (z) of the counter-clamping teeth (28) increases with increase in distance from the holding device (16).

7. Pull-off force measuring device in accordance with claim 6,
**characterised in that**
the depth (z) increases evenly by a certain value.

8. Pull-off force measuring device in accordance with claim 6,
**characterised in that**
an in respect to the holding device (16) first clamping tooth (26) and/or counter-clamping tooth (28) has a depth (z) of 0.2 mm, a second clamping tooth (26) and/or counter-clamping tooth (28) has a depth (z) of 0.6 mm, a third clamping tooth (26) and/or counter-clamping tooth (28) has a depth (z) of 0.9 mm, a fourth clamping tooth (26) and/or counter-clamping tooth (28) has a depth (z) of 1.2 mm and/or a fifth clamping tooth (26) and/or counter-clamping tooth (28) has a depth (z) of 1.5 mm.

9. Pull-off force measuring device in accordance with claim 6,
**characterised in that**
the depth (z) increases in accordance with a certain function.

10. Pull-off force measuring device in accordance with claim 9,
**characterised in that**
the depth (z) from one clamping tooth (26) and/or counter-clamping tooth (28) to the next clamping tooth (26) and/or counter-clamping tooth (28) doubles in each case.

## Revendications

1. Dispositif de mesure de la force de retrait, comprenant
un dispositif de retenue (16) pour retenir une partie fonctionnelle (14) d'une connexion de câble (10), et
un dispositif de serrage (18) ayant au moins deux mâchoires de serrage (20, 22) pour serrer un corps de câble (12) de la connexion de câble (10), une première mâchoire de serrage (20) présentant au moins trois dents de serrage (26),
**caractérisé en ce que**
les dents de serrage (26) présentent une profondeur (z) différente,
les sommets des dents de serrage (26) étant disposés à la même hauteur, et les dents de serrage (26) s'étendant vers l'intérieur à une profondeur différente, et
la profondeur (z) des dents de serrage (26) augmente au fur et à mesure que la distance par rapport au dispositif de retenue (16) augmente.

2. Dispositif de mesure de la force de retrait selon la revendication 1,
**caractérisé en ce que**
une deuxième mâchoire de serrage (22) disposée sur un côté opposé à la première mâchoire de serrage (20) présente au moins deux dents de serrage antagonistes (28) qui présentent une profondeur (z) différente,
les sommets des dents de serrage antagonistes (28) étant disposés à la même hauteur, et les dents de serrage antagonistes (28) s'étendant vers l'intérieur à une profondeur différente.

3. Dispositif de mesure de la force de retrait selon la revendication 1 ou 2,
**caractérisé en ce que**
les dents de serrage (26) et les dents de serrage antagonistes (28) sont disposées en étant décalées les unes par rapport aux autres.

4. Dispositif de mesure de la force de retrait selon l'une des revendications précédentes,
**caractérisé en ce que**
il est prévu plus de deux dents de serrage antagonistes (28), de préférence trois, quatre, cinq, six, sept, huit, neuf ou dix.

5. Dispositif de mesure de la force de retrait selon l'une des revendications précédentes,
**caractérisé en ce que**
la largeur des dents de serrage (26) et/ou des dents de serrage antagonistes (28) est identique.

6. Dispositif de mesure de la force de retrait selon l'une des revendications précédentes,
**caractérisé en ce que**
la profondeur (z) des dents de serrage antagonistes (28) augmente au fur et à mesure que la distance par rapport au dispositif de retenue (16) augmente.

7. Dispositif de mesure de la force de retrait selon la revendication 6,
**caractérisé en ce que**
la profondeur (z) augmente régulièrement d'une certaine valeur.

8. Dispositif de mesure de la force de retrait selon la revendication 6,
**caractérisé en ce que**
vue depuis le dispositif de retenue (16), une première dent de serrage (26) et/ou dent serrage antagoniste (28) présente une profondeur (z) de 0,2 mm, une deuxième dent de serrage (26) et/ou dent de serrage antagoniste (28) présente une profondeur (z) de 0,6 mm, une troisième dent de serrage (26) et/ou dent de serrage antagoniste (28) présente une profondeur (z) de 0,9 mm, une quatrième dent de serrage (26) et/ou dent de serrage antagoniste (28) présente une profondeur (z) de 1,2 mm et/ou une cinquième dent de serrage (26) et/ou dent de serrage antagoniste (28) présente une profondeur (z) de 1,5 mm.

9. Dispositif de mesure de la force de retrait selon la revendication 6,
**caractérisé en ce que**
la profondeur (z) augmente selon une fonction déterminée.

10. Dispositif de mesure de la force de retrait selon la revendication 9,
**caractérisé en ce que**
la profondeur (z) respective se multiplie par deux d'une dent de serrage (26) et/ou dent de serrage antagoniste (28) à la dent de serrage (26) et/ou dent de serrage antagoniste (28) suivante.
